# FASCICULE DE BREVET EUROPEEN

(11) **EP 1 084 046 B1**
(45) Date de publication et mention de la délivrance du brevet: **02.05.2002**
(21) Numéro de dépôt: 99924979.0
(22) Date de dépôt: 14.05.1999
(51) Int. Cl.: B60C 15/024

(54) **PNEUMATIQUE A PROTUBERANCE DE BOURRELET STRIEE**
LUFTREIFEN MIT GERILLTEM VORSPRUNG AN DER WULST
TYRE WITH SERRATED TYRE BEAD PROTUBERANCE

(30) Priorité: 05.06.1998 FR 9807150
(43) Date de publication de la demande: 21.03.2001
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: CHANDEZON, Pierre, F-63100 Clermont-Ferrand (FR); DRIEUX, Jean-Jacques, F-63530 Volvic (FR); MUHLHOFF, Olivier, F-63100 Clermont-Ferrand Cedex 09 (FR)
(74) Mandataire: Diernaz, Christian
(86) Numéro de dépôt international: EP9903345
(87) Numéro de publication internationale: WO9964258

(56) Documents cités:
- FR-A- 2 131 874
- FR-A- 2 335 360
- FR-A- 2 716 645
- LU-A- 64 945
- US-A- 4 155 393

## Description

La présente invention concerne un pneumatique à armature de carcasse radiale et plus particulièrement aux flanc et/ou bourrelet d'un tel pneumatique.

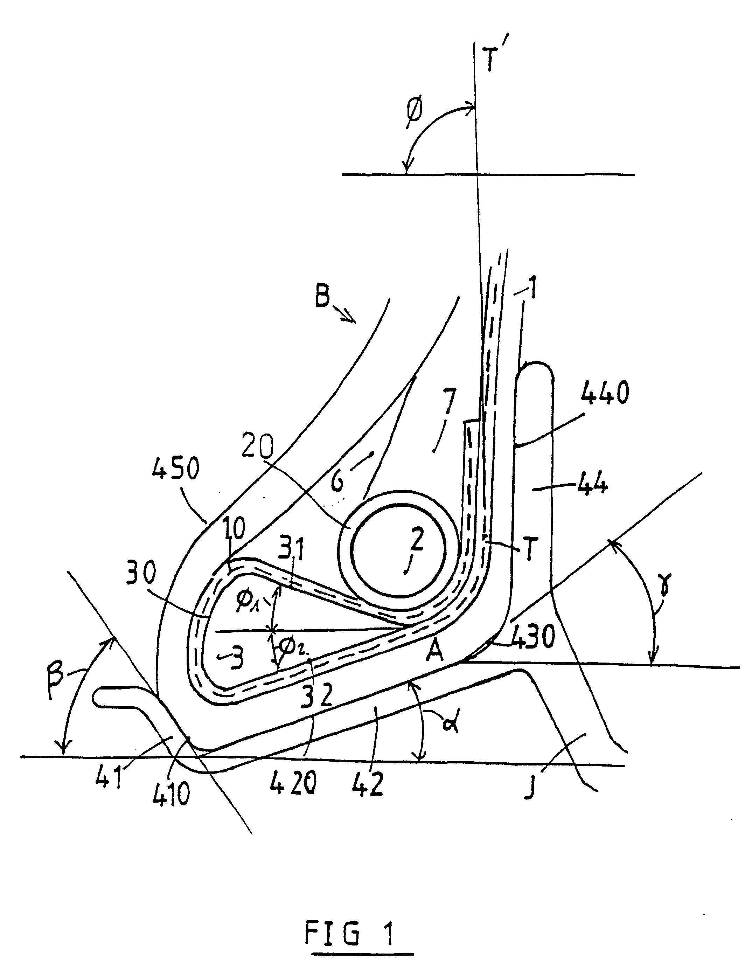

Les brevets français FR 2 699 121 et FR 2 716 645 (correspondant au préambule de la revendication 1) décrivent un pneumatique à armature de carcasse radiale de faible rapport H/S, H étant la hauteur du pneumatique sur jante et S sa largeur axiale maximale, destiné à être monté sur une jante dont au moins un siège est incliné vers l'extérieur et prolongé axialement à l'extérieur par une saillie de faible hauteur. Ledit pneumatique comporte au moins un bourrelet présentant les caractéristiques suivantes
a) le profil méridien de la fibre moyenne de l'armature de carcasse est tangent à la tringle d'ancrage de l'armature de carcasse en un point T tel que la tangente TT' fasse avec une parallèle avec l'axe de rotation du pneumatique un angle ⌀, ouvert radialement et axialement vers l'extérieur, au moins égal à 70°,
b) il est destiné à être monté sur une jante telle que décrite dans les brevets cités, c'est-à-dire présentant la particularité d'avoir au moins un siège de jante 42 incliné vers l'extérieur, ledit siège 42 étant prolongé axialement à l'intérieur soit par un rebord de jante 44 soit par le fond de jante sur lequel est posé un appui de soutien de bande de roulement, une face latérale dudit appui étant utilisée comme rebord de jante, et ledit siège étant prolongé axialement à l'extérieur par une saillie ou hump 41 de faible hauteur ;
c) le contour extérieur du bourrelet comprend (figure 1), axialement à l'intérieur, une paroi 440 sensiblement perpendiculaire à l'axe de rotation et peut prendre appui latéralement sur le rebord axialement intérieur 44 de la jante J de montage, ladite paroi 440 du bourrelet B étant prolongée axialement à l'extérieur par une génératrice tronconique 430, faisant avec une parallèle à l'axe de rotation un angle γ de 45° ouvert axialement vers l'intérieur et radialement vers l'extérieur, ladite génératrice 430 étant elle-même prolongée axialement à l'extérieur par une seconde génératrice tronconique 420 de siège de bourrelet faisant avec la direction de l'axe de rotation un angle α égal à 15°, ouvert axialement vers l'intérieur et radialement vers l'extérieur. Ladite génératrice 420 est dite inclinée vers l'extérieur, son extrémité axialement extérieure étant sur un cercle de diamètre inférieur au diamètre du cercle sur lequel se trouve son extrémité axialement intérieure. Une génératrice tronconique 410, prolongeant axialement à l'extérieur la génératrice 420 et faisant avec la direction de l'axe de rotation un angle β égal à 45°, ouvert axialement et radialement vers l'extérieur, complète le contour de la base du bourrelet B. Une paroi 450, d'orientation générale sensiblement perpendiculaire à la direction de l'axe de rotation de la jante, complète le contour du bourrelet B. Alors que la génératrice 420 prendra appui sur le siège de jante 42, incliné vers l'extérieur, la génératrice 410 prendra appui sur la paroi axialement intérieure de la saillie ou hump 41 de la jante J, inclinée du même angle β que la génératrice 410. Le bourrelet ainsi défini est un bourrelet dont le talon est disposé axialement à l'intérieur alors que la pointe de bourrelet est disposée axialement à l'extérieur.

Telle que la paroi axialement extérieure 450 est montrée, c'est-à-dire en retrait axial par rapport à l'extrémité axialement la plus à l'extérieur de la jante, le type de pneumatique ainsi décrit présente la particularité de ne pas protéger les éléments métalliques axialement les plus extérieurs de la jante contre les agressions causées par les trottoirs en roulage urbain. Le dit problème est résolu, par l'adaptation de la forme axialement extérieure de la pointe du bourrelet, adaptation conduisant dans le cas présent à recouvrir le bord de saillie extérieure de la jante par une masse ou protubérance plus ou moins importante de caoutchouc de qualité appropriée, la largeur axiale maximale du contour extérieur de la pointe de bourrelet étant supérieure à l'encombrement ou largeur axiale maximale de la jante de montage.

Si ladite protubérance axialement extérieure du bourrelet protège parfaitement la saillie correspondante de la jante, par contre elle est très sensible d'une part à l'abrasion lorsque le pneumatique frotte sur le trottoir, et d'autre part à l'arrachement de parcelles de gomme suite à l'initiation et la propagation de coupures et/ou cassures.

La présente invention a pour but de minimiser les conséquences des agressions de trottoirs sur ladite protubérance.

A cet effet et conformément à l'invention, la protubérance axialement extérieure du bourrelet est pourvue d'incisions de largeur non nulle, de profondeur au plus égale à 5 mm et disposées circonférentiellement parallèles entre elles.

De manière préférentielle, la largeur des incisions sera comprise entre 0,5 et 5 mm, et elles seront inclinées par rapport aux plans radiaux leur correspondant et passant par l'axe de rotation du pneumatique. Les incisions seront aussi avantageusement séparées circonférentiellement selon un pas compris entre 1 mm et 5 mm.

En même temps que la diminution des glissements entre la paroi extérieure d'une protubérance du fait de la présence de nombreuses lamelles de caoutchouc, il apparaît que la propagation de la dégradation de la masse de caoutchouc soit minimisée par la dite présence, ce qui conduit à une atténuation très nette de la perception visuelle des dégâts occasionnés.

Les caractéristiques de la présente invention seront mieux comprises à l'aide de la description qui suit et qui se réfère au dessin illustrant à titre non limitatif un exemple d'exécution et sur lequel :
- la figure 1 représente schématiquement un bourrelet du type étudié par l'invention,
- la figure 2 représente schématiquement en section méridienne un bourrelet amélioré conforme à l'invention,
- la figure 3 est une vue de face du bourrelet de la figure 2,

Le bourrelet, montré sur la figure 1 et tel que décrit dans les brevets FR 2 699 121 et FR 2 716 645 de la demanderesse, comprend une armature de carcasse 1, ancrée dans chaque bourrelet B par enroulement autour d'une tringle 2 en allant axialement de l'intérieur à l'extérieur pour former un retournement 10. Le profil méridien de la fibre moyenne de ladite armature de carcasse (en pointillés), composée dans l'exemple montré, d'une seule nappe de câbles textiles, est tangent à la tringle 2 et la tangente TT' fait avec une parallèle à l'axe de rotation un angle ⌀ égal à 85°. L'armature de carcasse 1 est enroulée autour de la tringle enrobée 2 pour former un retournement 10 qui entoure dans sa totalité le contour d'un profilé 3 disposé axialement à l'extérieur de la tringle d'ancrage 2 de l'armature de carcasse, ledit profilé se présentant sous la forme d'un secteur sensiblement circulaire avec un sommet ou centre A situé radialement sous la tringle 2, deux côtés ou rayons 31 et 32 partant dudit sommet A, et un troisième côté 30, opposé au sommet A, le côté ou rayon radialement extérieur 31 faisant avec une parallèle à l'axe de rotation un angle ⌀₁ égal à 45°, alors que le côté ou rayon radialement intérieur 32 faisant avec la même parallèle un angle ⌀₂ égal à 15°, et ledit profilé 3, complété axialement à l'extérieur par le côté sensiblement circulaire 30, étant d'un mélange caoutchouteux ayant à l'état vulcanisé une dureté Shore A égale à 94. Le retournement 10 forme alors remièrement le côté radialement intérieur 32 du profilé 3, deuxièmement le côté latéral 30 axialement extérieur dudit profilé puis dernièrement le côté radialement extérieur 31 du même profilé, pour s'enrouler de nouveau autour de la tringle 2, l'extrémité dudit retournement étant radialement située au dessus de la tringle 2.

La tringle 2 enrobée d'une couche de caoutchouc 20 est surmontée radialement à l'extérieur d'un profilé 7 de mélange caoutchouteux de dureté Shore A égale à 37. Radialement à l'extérieur du profilé 3 et axialement à l'extérieur dudit profilé 7 est disposé un troisième profilé 6 en mélange caoutchouteux ayant une dureté Shore A égale à celle du profilé 7 et donc nettement inférieure à la dureté du mélange du profile 3.

La saillie 41 de la jante J et la paroi 450 du bourrelet B étant axialement à l'extérieur, aucune protection efficace n'est assurée contre le râpage et les chocs provoqués par les trottoirs.

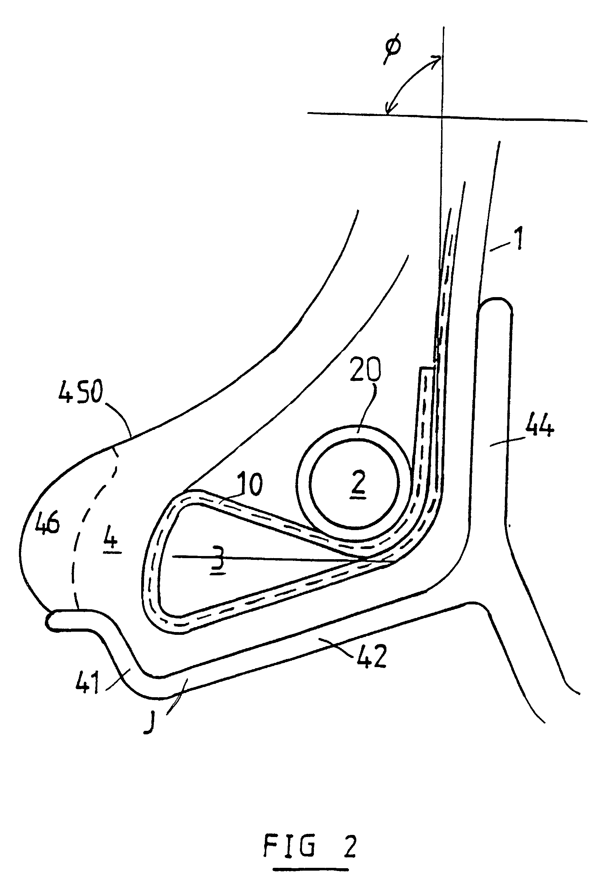

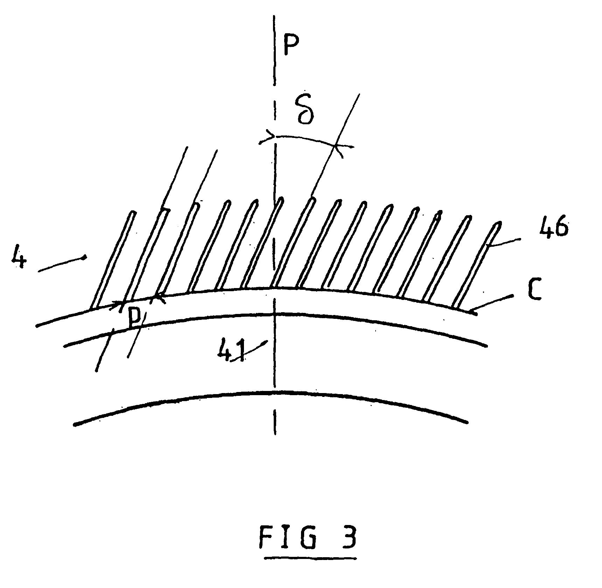

La figure 2 montre une forme axialement extérieure 450 d'un bourrelet modifié et amélioré dans le sens où ledit bourrelet présente une protubérance 4 dépassant axialement l'extrémité axialement extérieure de la jante de montage J. Ladite protubérance 4, de forme extérieure de préférence arrondie, protège la jante J, en jouant le rôle de pare-chocs amortisseur. La dite protubérance 4 est pourvue sur sa circonférence d'incisions 46 (figure 3) de largeur non nulle, égale à 1,5 mm, inclinées d'un angle δ, égal à 25°, par rapport à la trace-du plan radial P passant par l'extrémité inférieure d'une incision 46. Elles sont disposées circonférentiellement, sensiblement parallèles entre elles, et selon un pas p, le pas étant la distance circonférentielle entre deux incisions adjacentes mesurée sur le cercle C, lieu géométrique de toutes leurs extrémités radialement intérieures, égal à 4 mm.

## Revendications

1. Pneumatique à armature de carcasse radiale (1) de faible rapport H/S, destiné à être monté sur une jante J dont au moins un siège est incliné vers l'extérieur et prolongé axialement à l'extérieur par une saillie (41) de faible hauteur, et comprenant au moins un bourrelet avec un talon axialement intérieur et une pointe axialemént extérieure, ayant une protubérance (450,4) axialement extérieure, **caractérisé en ce que** ladite protubérance (450,4) a une largeur axiale maximale supérieure à l'encombrement de la jante J, et est pourvue d'incisions (46) de largeur non nulle, de profondeur au plus égale à 5 mm et disposées circonférentiellement parallèles entre elles.

2. Pneumatique selon la revendication 1, **caractérisé en ce que** la largeur des incisions est comprise entre 0,5 et 5 mm.

3. Pneumatique selon l'une des revendications 1 ou 2, **caractérisé en ce que** les incisions sont inclinées par rapport aux plans radiaux P leur correspondant et passant par les extrémités inférieures des incisions (46).

4. Pneumatique selon l'une des revendications 1 ou 2, **caractérisé en ce que** les incisions (46) sont disposées circonférentiellement paralleles entre elles selon un pas compris entre 3 mm et 5 mm.

## Patentansprüche

1. Reifen mit radialer Karkassenbewehrung (1) mit geringem Verhältnis H/S, der dazu bestimmt ist, auf einer F'elge J montiert zu werden, bei der mindestens ein Sitz nach außen geneigt und axial auf der Außenseite durch einen Vorsprung (41) geringer Höhe verlängert ist, sowie mit mindestens einem Wulst mit einer axial inneren Ferse und einer axial äußeren Spitze, die einen axial äußeren Vorsprung bzw. eine axial äußere Ausstülpung (450, 4) aufweist, **dadurch gekennzeichnet, daß** die genannte Ausstülpung (450, 4) eine maximale axiale Breite aufweist, die größer ist als der Raumbedarf der Felge J und mit Einschnitten (46) mit einer Breite versehen ist, die nicht Null ist, mit einer Tiefe, die höchstens 5 mm beträgt, und mit einer in Umfangsrichtung zueinander parallelen Anordnung.

2. Reifen nach Anspruch 1, **dadurch gekennzeichnet, daß** die Breite der Einschnitte zwischen 0,5 und 5 mm liegt.

3. Reifen nach einem der Ansprüche 1 oder 2, **dadurch gekennzeichnet, daß** die Einschnitte in Bezug auf axiale Ebenen P geneigt sind, die ihnen entsprechen und durch die unteren Enden der Einschnitte (46) hindurchlaufen.

4. Reifen nach einem der Ansprüche 1 oder 2, **dadurch gekennzeichnet, daß** die Einschnitte (46) untereinander parallel in einer Teilung angeordnet sind, die zwischen 3 mm und 5 mm liegt.

## Claims

1. A tyre having a radial carcass reinforcement (1) of low H/S ratio, which is intended to be mounted on a rim J, at least one seat of which is inclined towards the outside and extended axially to the outside by a protrusion (41) of low height, and comprising at least one bead with an axially inner heel and an axially outer toe, having an axially outer protuberance (450, 4), **characterised in that** said protuberance (450, 4) has a maximum axial width greater than the space taken up by the rim J, and is provided with incisions (46) of a width other than zero, of a depth of at most 5 mm and arranged circumferentially parallel to each other.

2. A tyre according to Claim 1, **characterised in that** the width of the incisions is between 0.5 and 5 mm.

3. A tyre according to one of Claims 1 or 2, **characterised in that** the incisions are inclined relative to the radial planes P corresponding to them and passing through the lower ends of the incisions (46).

4. A tyre according to one of Claims 1 or 2, **characterised in that** the incisions (46) are arranged circumferentially, parallel to each other at a pitch of between 3 mm and 5 mm.
